# EUROPÄISCHE PATENTSCHRIFT

(11) **EP 2 383 208 B1**
(45) Veröffentlichungstag und Bekanntmachung des Hinweises auf die Patenterteilung: **26.12.2012**
(21) Anmeldenummer: 11162413.6
(22) Anmeldetag: 14.04.2011
(51) Int. Cl.: B65G 1/04, B66F 17/00, G01G 19/18, B66F 9/07, B66F 9/24, B66D 1/58

(54) **Verfahren und Anordnung zum Auslagern von Lagergut aus einem Lagerplatz eines Lagers**
Method and assembly for unloading storage goods from a storage location of a warehouse
Procédé et agencement de déstockage de marchandises de stockage d'une aire de stockage d'un entrepôt

(30) Priorität: 29.04.2010 DE 102010028392
(43) Veröffentlichungstag der Anmeldung: 02.11.2011
(73) Patentinhaber: Trumpf Sachsen GmbH, 01904 Neukirch (DE)
(72) Erfinder: Klanthe, Christoph, 01909, Großharthau (DE); Koehler, Stephan, 01855 Sebnitz (DE); Höer, Matthias, 01904, Weifa (DE)
(74) Vertreter: Kohler Schmid Möbus

(56) Entgegenhaltungen:
- WO-A1-2009/052891
- JP-A- 4 298 497
- JP-A- 7 285 798
- JP-A- 56 053 420
- RU-C1- 2 354 604
- UA-C2- 82 679

## Beschreibung

Die Erfindung betrifft ein Verfahren zum Auslagern von Lagergut aus einem Lagerplatz eines Lagers, wobei das Lagergut mit einer horizontalen Übernahmebewegung von dem Lagerplatz auf ein Lastfördermittel übernommen wird, um anschließend gemeinsam mit dem Lastfördermittel mittels eines Hubantriebes des Lastfördermittels mit einer vertikalen Förderbewegung abgefördert zu werden.

Die Erfindung betrifft des Weiteren eine Anordnung zum Auslagern von Lagergut aus einem Lagerplatz eines Lagers,
- mit einem Lastfördermittel, das einen Hubantrieb mit einer Hubantriebssteuerung aufweist,
- mit einer Transfervorrichtung für Lagergut,
- mit einem Lasterfassungsantrieb und einer mit dem Lasterfassungsantrieb in Verbindung stehenden Erfassungseinheit sowie
- mit einer Auswerteeinheit, die einerseits mit der Erfassungseinheit und andererseits mit der Hubantriebssteuerung in Verbindung steht,
wobei die Transfervorrichtung das Lagergut mit einer horizontalen Übernahmebewegung von dem Lagerplatz auf das Lastfördermittel übernimmt und wobei der Hubantrieb des Lastfördermittels das von dem Lastfördermittel übernommene Lagergut gemeinsam mit dem Lastfördermittel mit einer vertikalen Förderbewegung abfördert.

Ein Verfahren sowie eine Anordnung der vorstehenden Art sind bekannt aus WO 2009/052891 A1. Diese Druckschrift betrifft eine Fördervorrichtung mit einer Hubbühne, die einem Regallager vorgesetzt ist. Mittels eines Hubantriebes wird die Hubbühne angehoben und abgesenkt. An der Oberseite der Hubbühne ist ein Laufwagen in horizontaler Richtung entlang der Front des Regallagers verfahrbar. Zu diesem Zweck weist der Laufwagen ein Fahrgestell mit Rädern und mit die Räder lagernden Achsen auf. Als Antrieb für den Laufwagen ist eine motorische Antriebseinheit vorgesehen. An seiner Oberseite ist der Laufwagen mit einer Transfervorrichtung versehen. Die Transfervorrichtung dient dazu, mit Lagergut beladene Lagergutträger an Lagerplätzen des Regallagers einzulagern oder von den Lagerplätzen zu übernehmen. Eine motorische Antriebseinheit treibt die Lagergutträger bei deren Transfer zwischen dem Laufwagen und den Lagerplätzen an. Um einen sicheren Betrieb der Anlage zu gewährleisten, werden an den Lagergutträgern Gewichtsmessungen vorgenommen. Als Wiegeeinrichtung wird in erster Linie das Fahrgestell des Laufwagens genutzt. Anhand der Durchbiegung der Achsen des Fahrgestells wird das Gewicht des betreffenden Lagergutträgers ermittelt. Als Alternative besteht zum einen die Möglichkeit, das Gewicht des betreffenden Lagergutträgers anhand der Belastung zu ermitteln, welcher die motorische Antriebseinheit der Transfervorrichtung bei der Transferbewegung des Lagergutträgers ausgesetzt ist. Zum andern kann das Gewicht des betreffenden Lagergutträgers über die Belastung der motorischen Antriebseinheit des Laufwagens bei einer Bewegung des mit dem Lagergutträger beladenen Laufwagens längs der Hubbühne bestimmt werden. Sowohl die mittels der Transfervorrichtung bewirkten Bewegungen von Lagergutträgern als auch die Bewegungen des mit einem Lagergutträger beladenen Laufwagens längs der Hubbühne sind horizontale Bewegungen im Rahmen von übergeordneten Förderbewegungen.

Ein gattungsgemäßen Stand der Technik ist bekannt aus JP 04-298497 A. Diese Druckschrift offenbart ein Regalbediengerät mit einer Hubbühne, die an einem vertikalen Gerüst mit Förderbewegungen angetrieben wird. Zum Antrieb der Hubbühne dient ein Hubantriebsmotor. Neben dem Regalbediengerät ist ein Horizontalförderer mit einem Fördermotor angeordnet. Ein Lagergut wird zunächst mittels des Fördermotors längs des Horizontalförderers bewegt. Während dieser Bewegung wird die durch das Lagergut bedingte Belastung des Fördermotors ermittelt. Auf Basis der Belastung des Fördermotors bei der horizontalen Bewegung des Lagergutes wird die Belastung bestimmt, welcher der Hubantriebsmotor bei einer vertikalen Förderung des Lagergutes ausgesetzt wäre. Auf diese Art und Weise wird überprüft, ob die Leistungsfähigkeit des Hubantriebsmotors für eine Vertikalbewegung des Lagergutes ausreicht.

EP 2 062 836 A1 offenbart ein Regalbediengerät zum Auslagern von Paletten aus einem Lagerregal. Zu diesem Zweck verfährt das Regalbediengerät mit einer bühnenartigen Tragstruktur in vertikaler Richtung bis auf Höhe eines mit einer auszulagernden Palette belegten Lagerplatzes des Lagerregals. Anschließend wird die Palette von einer Transfereinrichtung des Regalbediengerätes erfasst und mit einer horizontalen Übernahmebewegung auf die bühnenartige Tragstruktur des Regalbediengerätes gezogen. Nach der Übernahme der Palette kann die bühnenartige Tragstruktur gemeinsam mit der Palette eine vertikale Förderbewegung ausführen.

Die zulässige Traglast von Regalbediengeräten der vorbekannten Art ist begrenzt. Unter Überlast ausgeführte Förderbewegungen können Mensch und Material gefährden und müssen daher verhindert werden.

Aufgabe der vorliegenden Erfindung ist es, ein Verfahren sowie eine Vorrichtung zum Auslagern von Lagergut aus einem Lagerplatz eines Lagers bereitzustellen, im Falle derer Förderbewegungen unter Überlast und damit verbundene Gefährdungen ohne Inkaufnahme einer nennenswerten Überdimensionierung des Hubantriebes des Lastfördermittels aber gleichwohl zuverlässig ausgeschlossen sind.

Erfindungsgemäß gelöst wird diese Aufgabe durch das Verfahren gemäß Patentanspruch 1 sowie durch die Anordnung gemäß Patentanspruch 8.

Im Falle der Erfindung wird das auszulagernde Lagergut zunächst mit einer horizontalen Bewegung auf ein Lastfördermittel übernommen, welches dazu dienen kann, das übernommene Lagergut mit einer vertikalen Förderbewegung abzufördern. Ob die Last des Lagergutes eine derartige Förderbewegung zulässt, wird nicht - wie es an sich naheliegend wäre - während der horizontalen Übernahmebewegung sondern erst nach der Übernahme des Lagergutes durch das Lastfördermittel überprüft. Nach der Übernahme durch das Lastfördermittel wird das Lagergut gemeinsam mit dem Lastfördermittel mit einer vertikalen Lasterfassungsbewegung, d.h. mit einer speziellen Hubbewegung, bewegt. Die Belastung, die an einem zu diesem Zweck eingesetzten Lasterfassungsantrieb aufgrund der Lasterfassungsbewegung auftritt, wird erfasst und mit einer Belastungsgrenze verglichen. Die Belastung des Lasterfassungsantriebes spiegelt die Größe der in vertikaler Richtung gegebenenfalls zu fördernden Last wider. Die Belastungsgrenze wird in Abhängigkeit von der zulässigen Traglast des Lastfördermittels bzw. des Hubantriebes festgelegt. Überschreitet die festgestellte Belastung des Lasterfassungsantriebes die vorgegebene Belastungsgrenze, so unterbleibt durch entsprechende Steuerung des Hubantriebes des Lastfördermittels die an sich vorgesehene Förderbewegung. Bevorzugtermaßen wird das Lastfördermittel stattdessen nach der Lasterfassungsbewegung in diejenige vertikale Position bewegt, in welcher es zuvor das Lagergut übernommen hat, und das Lagergut wird mit einer der vorausgegangenen Übernahmebewegung entgegengerichteten Einlagerungsbewegung zu seinem ursprünglichen Lagerplatz rücküberführt. Aufgrund der erfindungsgemäßen Lastüberprüfung erübrigt sich eine nennenswerte Überdimensionierung des Hubantriebes des Lastfördermittels, wie sie bislang zur Bereitstellung von Sicherheitsreserven üblich war.

Besondere Ausführungsarten des Verfahrens nach Patentanspruch 1 sowie der Anordnung nach Patentanspruch 8 ergeben sich aus den abhängigen Patentansprüchen 2 bis 7 und 9.

Gemäß den Patentansprüchen 2 und 9 wird in bevorzugter Ausgestaltung der Erfindung als Lasterfassungsantrieb der Hubantrieb des Lastfördermittels genutzt. Zur Lasterfassung des Lagergutes kann eine Hubbewegung ausgeführt werden, die ihrer Art nach der beabsichtigten Förderbewegung entspricht. Komponenten des Hubantriebes können genutzt werden.

Zur Erfassung der Belastung des Lasterfassungsantriebes, gegebenenfalls des Hubantriebes des Lastfördermittels, bieten sich erfindungsgemäß unterschiedliche Möglichkeiten. Mit einfachen technischen Mitteln und gleichwohl zuverlässig ist eine Lasterfassung dann möglich, wenn die Belastung des Lasterfassungsantriebes über die Kraft des Antriebsmotors des Lasterfassungsantriebes erfasst wird (Patentanspruch 3). Werden mehrere Antriebsmotoren eingesetzt, so ist die Kraft sämtlicher Antriebsmotoren zu ermitteln. Die sich insgesamt ergebende Kraft wird mit der vorgegebenen Belastungsgrenze verglichen,

Für den Lasterfassungsantrieb, gegebenenfalls den Hubantrieb des Lastfördermittels, kommen unterschiedliche Antriebsbauarten in Frage. Erfindungsgemäß bevorzugt wird ein in der Praxis bewährter elektrischer Antrieb mit einem elektrischen Antriebsmotor und einem Frequenzumrichter (Patentanspruch 4). Der Motorstrom, welcher der mit einer Lasterfassungsbewegung zu hebenden Last proportional ist, kann an dem Frequenzumrichter ohne zusätzliche Stromsensoren erfasst werden.

Aussagekräftige Informationen über die Lastverhältnisse lassen sich dann gewinnen, wenn - wie gemäß Patentanspruch 5 vorgesehen - die Lasterfassungsbewegung ausgeführt wird, nachdem das Lagergut von dem Lastfördermittel vollständig übernommen worden ist.

Erfahrungsgemäß wird die Lasterfassungsbewegung nicht gleichförmig ausgeführt. Vielmehr treten insbesondere zu Beginn der Lasterfassungsbewegung besondere Bewegungen, beispielsweise Schwingungen des Lastfördermittels auf. Der Lasterfassungsantrieb bzw. der Hubantrieb reagiert auf derartige Erscheinungen. Vor diesem Hintergrund wird in weiterer bevorzugter Ausgestaltung der Erfindung die Belastung des Lasterfassungsantriebes, gegebenenfalls des Hubantriebes des Lastfördermittels, zu einem Zeitpunkt erfasst, welcher dem Beginn der Lasterfassungsbewegung zeitlich nachfolgt (Patentanspruch 6). Dadurch wird einer Verfremdung des Ergebnisses der Lasterfassung durch die beschriebenen Erscheinungen zu Beginn der Lasterfassungsbewegung entgegengewirkt.

An Lasterfassungsantrieben bzw. Hubantrieben des Lastfördermittels, die zur Ausführung der Lasterfassungsbewegung eine über ein Antriebszahnrad angetriebene Antriebskette aufweisen, wird ausweislich Patentanspruch 7 der Betrag der Lasterfassungsbewegung kleiner als die Teilung der Verzahnung des Antriebszahnrades für die Antriebskette bemessen. Diese Maßnahme stellt sicher, dass sich während der Lasterfassung die gegenseitige Zuordnung der Zähne des Antriebszahnrades und der Kettenglieder der Antriebskette nicht verändert. Während der gesamten Last-erfassung sind die betreffenden Zähne des Antriebszahnrades mit denselben Kettengliedern der Antriebskette im Eingriff. Ein Übergang von Kettengliedern von einem Zahn des Antriebszahnrades auf einen anderen wird vermieden. Derartige Übergänge wären mit Erschütterungen und Schwingungen des Systems verbunden, die sich ihrerseits auf die erfasste Belastung des Lasterfassungsantriebes auswirken würden und die zur Folge hätten, dass die erfasste Belastung die aus der Last des Lagergutes resultierenden Lastverhältnisse nur bedingt widerspiegeln würde.

Nachfolgend wird die Erfindung anhand beispielhafter schematischer Darstellungen näher erläutert. Es zeigen:
- Fig. 1: ein Lager mit einem Regal, einem Regalbediengerät sowie einer an dem Regal eingelagerten Palette,
- Fig. 2: die Anordnung gemäß Figur 1 bei auf das Regalbediengerät übernommener Palette,
- Fig. 3: den Hubantrieb des Regalbediengerätes gemäß den Figuren 1 und 2 einschließlich der Hubantriebssteuerung,
- Fig. 4: den Ablaufplan für das Auslagern einer Palette an dem Lager gemäß den Figuren 1 und 2 einschließlich einer Lasterfassungsbewegung des Regalbediengerätes und
- Fig. 5: die zeitabhängige Entwicklung von Motorstrom und Lagesollwert des Hubantriebes des Regalbediengerätes gemäß den Figuren 1 und 2 beim Auslagern einer Palette.

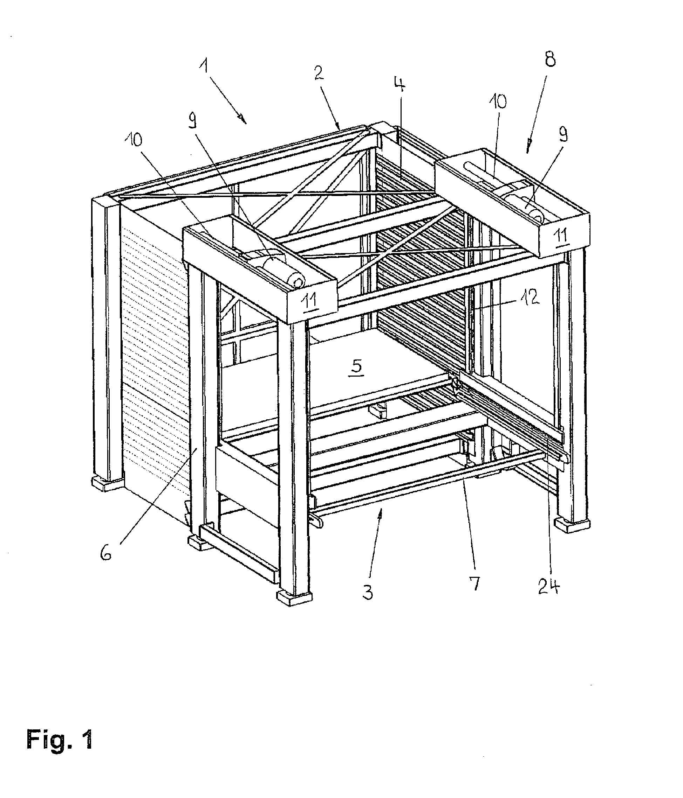

Gemäß Figur 1 umfasst ein Lager 1 ein Regal 2 sowie ein Regalbediengerät 3. Das Regal 2 weist in gewohnter Weise eine Mehrzahl von übereinander angeordneten Lagerplätzen 4 für Lagergut in Form von Paletten 5 auf. Der Anschaulichkeit halber ist in Figur 1 lediglich eine einzige in dem Regal 2 eingelagerte Palette 5 gezeigt.

Das Regalbediengerät 3 bildet eine Anordnung zum Ein- und Auslagern von Lagergut bzw. von Paletten 5 an dem Regal 2. Ein Trag- und Führungsgerüst 6 führt eine als Lastfördermittel vorgesehene Hubbühne 7 des Regalbediengerätes 3 in vertikaler Richtung. Mittels eines motorischen Hubantriebes 8 kann die Hubbühne 7 angehoben und abgesenkt werden.

Der Hubantrieb 8 des Regalbediengerätes 3 umfasst zwei als Synchronservomotoren ausgeführte elektrische Antriebsmotoren als Hubmotoren 9. Diese sind an dem Trag- und Führungsgerüst 6 einander gegenüberliegend montiert.

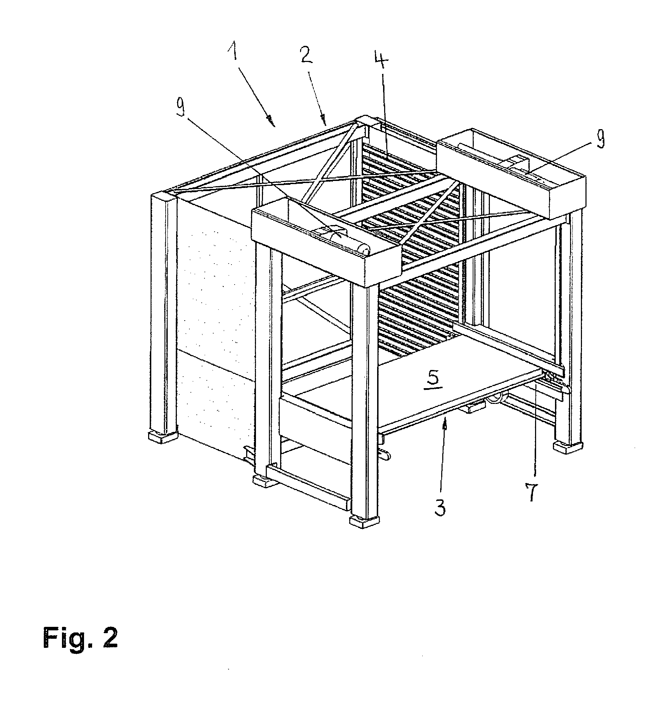

Über ein Getriebe mit einer Getriebewelle 10 treibt jeder der Hubmotoren 9 zwei als Kettenräder ausgebildete Antriebszahnräder an, von denen jeweils eines auf jedem Ende der betreffenden Getriebewelle 10 aufsitzt. In den Figuren 1 und 2 werden die Kettenräder durch Antriebsgehäuse 11 des Hubantriebes 8 verdeckt.

Die Kettenräder greifen jeweils in eine Antriebskette bzw. Hubkette 12 ein. Eine Hubkette 12 verläuft an jeder der vertikalen Säulen des Trag- und Führungsgerüstes 6. Von den insgesamt vier Hubketten 12 ist in den Figuren 1 und 2 eine zu erkennen. Bei den Hubketten 12 handelt es sich um herkömmliche Rollenkette.

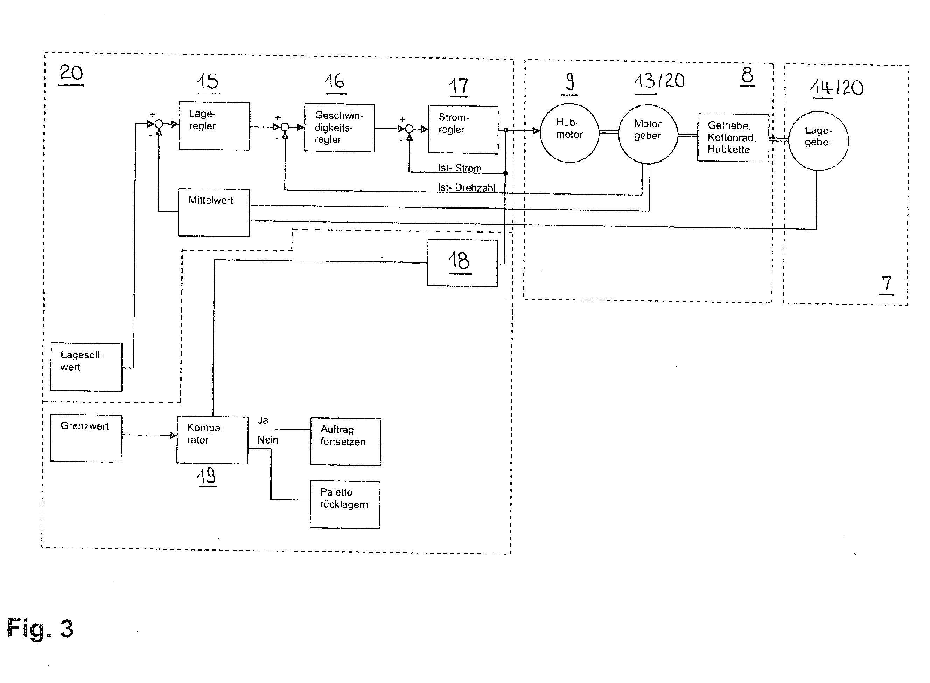

Gemeinsam mit dem Getriebe und den Kettenrädern stellen die Hubketten 12 eine Antriebsverbindung zwischen dem jeweiligen Hubmotor 9 des Hubantriebes 8 einerseits und der Hubbühne 7 des Regalbediengerätes 3 andererseits her. Unter anderem diese Antriebsverbindung ist in Figur 3 veranschaulicht.

Wie aus Figur 3 außerdem hervorgeht, ist jeder der Hubmotoren 9 mit einem Motorgeber 13 versehen. Der Motorgeber 13 liefert Informationen sowohl über die Ist-Drehzahl des betreffenden Hubmotors 9 als auch über die vertikale Hublage der Hubbühne 7, so wie sich die Hublage aufgrund der Betätigung des Hubmotors 9 an sich einstellen müsse. Da diese theoretische Hublage der Hubbühne 7 aber beispielsweise aufgrund einer lastbedingten Längung der Hubketten 12 von der tatsächlichen Hublage der Hubbühne 7 abweichen kann, ist die Hubbühne 7 mit einem Lagegeber 14 versehen.

Aus der Hublageninformation des Motorgebers 13 und aus der Hublageninformation des Lagegebers 14 wird ein Mittelwert gebildet, der als Hublagen-Istwert mit einem von der numerischen Steuerung des Hubantriebes 8 vorgegebenen Lagesollwert verglichen wird. Ergibt der Ist-/Sollwertvergleich eine Lagedifferenz, so wird diese in einem Lageregler 15 mit einem Verstärkungsfaktor verstärkt. Auf der Grundlage der verstärkten Lagedifferenz wird mittels eines Geschwindigkeitsreglers 16 und eines Stromreglers 17 der Motorstrom der Hubmotoren 9 im Sinne einer Beseitigung der Lagedifferenz geregelt, Der Motorgeber 13, der Lagegeber 14, der Lageregler 15, der Geschwindigkeitsregler 16 und der Stromregler 17 sind Teil einer Hubantriebssteuerung 20. Die Hubmotoren 9 sowie die jeweils zugeordneten Getriebe, Kettenräder und Hubketten 12 bilden den Hubantrieb 8 des Regalbediengerätes 3.

Der Hubantrieb 8 des Regalbediengerätes 3 dient nicht nur zur Ausführung vertikaler Förderbewegungen sondern auch zur Realisierung vertikaler Lasterfassungsbewegungen der Hubbühne 7. Insofern bildet der Hubantrieb 8 auch einen Lasterfassungsantrieb.

Zu diesem Zweck sind an den Hub- bzw. Lasterfassungsantrieb 8, im Einzelnen an die Hubantriebssteuerung 20, eine Erfassungseinheit 18 sowie eine Auswerteeinheit 19 angebunden. Mittels der Erfassungseinheit 18 wird an einem nicht im Einzelnen gezeigten Umrichter eines jeden Hubmotors 9 der Motorstrom erfasste bzw. gemessen. Die erfassten Motorströme werden addiert und in der Auswerteeinheit 19 mit einem vorgegebenen Grenzwert verglichen. In Abhängigkeit von dem Vergleichsergebnis reagiert die Hubantriebssteuerung 20.

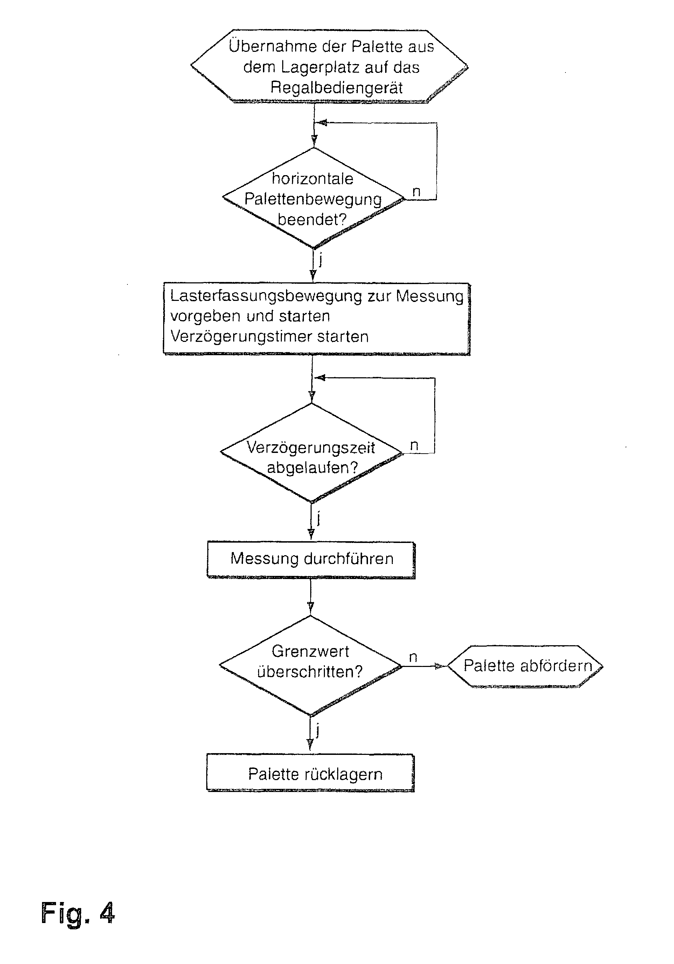

Eine vertikale Lasterfassungsbewegung wird mittels des Hubantriebes 8 in der in Figur 2 dargestellten Betriebsphase der Auslagerung von Lagergut aus dem Regal 2 des Lagers 1 durchgeführt. Die einzelnen Abläufe während des Auslagerungsprozesses sind in dem Ablaufplan von Figur 4 dargestellt.

Gemäß Figur 4 wird eine Palette, in dem dargestellten Beispielsfall die Palette 5, aus dem betreffenden Lagerplatz 4 des Regals 2 auf das Regalbediengerät 3, im Einzelnen auf dessen Hubbühne 7, übernommen. Dabei wird die betreffende Palette 5 durch eine herkömmliche, in Figur 1 angedeutete und mit einer Transferkette versehene Transfervorrichtung 24 mit einer horizontalen Übernahmebewegung von dem betreffenden Lagerplatz 4 des Regals 2 auf die Hubbühne 7 transferiert. Nachdem die Palette 5 von der Hubbühne 7 vollständig übernommen worden ist (Figur 2) und die horizontale Palettenbewegung dementsprechend beendet ist (Figur 4), wird die vertikale Lasterfassungsbewegung eingeleitet.

Für die vertikale Lasterfassungsbewegung ist in der Hubantriebssteuerung 20 ein Lagesollwert hinterlegt. Im gezeigten Beispielsfall liegt dieser Lagesollwert 0,05mm über dem Lagesollwert für die Hubbühne 7 bei der Übernahme der Palette 5. Der Betrag der vertikalen Lasterfassungsbewegung beläuft sich dementsprechend auf 0,05mm. Dieser Betrag ist kleiner als die Teilung der Kettenräder des Hubantriebes 8. Folglich ist sichergestellt, dass sich während der gesamten Lasterfassungsbewegung die betreffenden Zähne der Kettenräder mit ein und denselben Gliedern der Hubketten 12 im Eingriff befinden. Erschütterungen im Antriebsstrang der Hubbühne 7, wie sie bei dem Übergang von Kettengliedern der Hubketten 12 von einem Zahn des betreffenden Kettenrades auf einen anderen Zahn auftreten ("Polygoneffekt"), werden vermieden.

Um die mit der Palette 5 beladene Hubbühne 7 in eine dem Lagesollwert der vertikalen Lasterfassungsbewegung entsprechende Hublage zu überführen, werden die Hubmotoren 9 des Hubantriebes 8 in Gang gesetzt und mit dem entsprechenden Motorstrom versorgt. Aufgrund der Proportionalität zwischen dem Motorstrom und der Leistung bzw. der Kraft der Hubmotoren 9 spiegelt der Motorstrom die Belastung des Hubantriebes 8 aufgrund der vertikalen Lasterfassungsbewegung wider.

Der Motorstrom der Hubmotoren 9 wird mittels der Erfassungseinheit 18 gemessen. Die Messung des Motorstromes wird zu einem Zeitpunkt durchgeführt, welcher dem Beginn der vertikalen Lasterfassungsbewegung zeitlich nachfolgt.

Der Messzeitpunkt wird mittels eines Verzögerungstimers definiert, der mit Beginn der Lasterfassungsbewegung startet (Figur 4). Ist die vorgegebene Verzögerungszeit, in dem vorliegenden Beispielsfall 0,3 Sekunden, abgelaufen, so wird die Messung des Motorstromes durchgeführt. Durch die zeitliche Verzögerung der Messung gegenüber dem Beginn der Lasterfassungsbewegung wird sichergestellt, dass das Messergebnis nicht durch Schwankungen des Motorstroms verfremdet wird, die allein darauf zurückzuführen sind, dass die Hubbühne 7 und die Palette 5 aus dem Ruhezustand in den bewegten Zustand überführt werden.

Der für den Motorstrom erfasste Messwert wird in einem Komparator der Auswerteeinheit 19 mit einem dort hinterlegten Grenzwert verglichen. Wird dieser Grenzwert überschritten, so unterbleibt eine vertikale Förderbewegung von Hubbühne 7 und Palette 5. Stattdessen wird die Hubbühne 7 lediglich in diejenige Hublage abgesenkt, bei welcher sie zuvor die Palette 5 übernommen hat. Anschließend wird die Palette 5 mittels der Übernahmevorrichtung 24 des Regalbediengerätes 3 auf den betreffenden Lagerplatz 4 des Regals 2 rückgelagert (Figur 4).

Wird der Grenzwert des Motorstromes durch den Messwert nicht überschritten, so wird die Palette 5 mit einer vertikalen Förderbewegung abgefördert (Figur 4), d.h. der Auftrag zur Auslagerung der Palette 5 wird fortgesetzt (Figur 3).

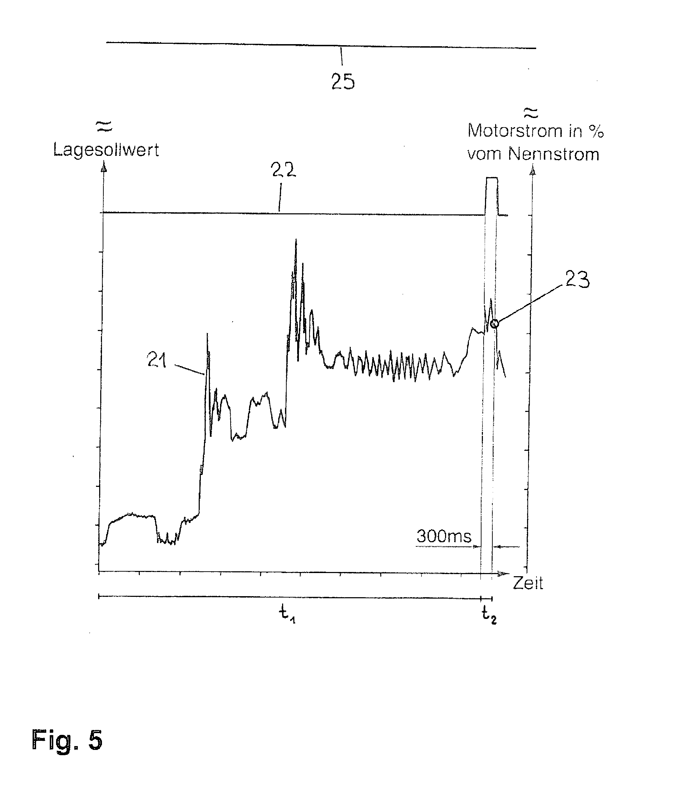

In Figur 5 ist die zeitliche Entwicklung des Motorstroms während des Auslagerns der Palette 5 in einer Linie 21 beispielhaft veranschaulicht. Eine Linie 22 stellt den Lagesollwert für die Hubbühne 7 während des Auslagerungsprozesses dar.

Während eines Zeitraums t₁ befindet sich die Hubbühne 7 in vertikaler Richtung in derjenigen Position, in welcher sie die Palette 5 übernimmt. Während dieser Zeit weist die Linie 21 für den Motorstrom eine Mehrzahl nennenswerter Ausschläge auf. Diese Ausschläge sind darauf zurückzuführen, dass die Palette 5 nicht mit einer gleichförmigen Bewegung auf die Hubbühne 7 transferiert wird sondern dass vielmehr gelegentliche Belastungsschläge auftreten, auf welche der Hubantrieb 8 mit einer schlagartigen Erhöhung des Motorstroms reagiert. Am Ende des Zeitraums t₁ hat die Hubbühne 7 die Palette 5 vollständig übernommen und die vertikale Lasterfassungsbewegung wird eingeleitet. Dementsprechend entwickelt sich der Lagesollwert für die Hubbühne 7. Auf den Zeitraum t₁ der horizontalen Übernahmebewegung der Palette 5 folgt ein Zeitraum t₂ der Lasterfassungsbewegung mit einer Dauer von 0,3 Sekunden.

Erst gegen Ende des Zeitraums t₂ wird derjenige Messwert des Motorstroms bestimmt, welcher mit dem vorgegebenen Grenzwert zu vergleichen ist. Gemäß Figur 5 hat sich der Motorstrom zu dem Messzeitpunkt nach vorausgegangenen, auf die Änderung des Bewegungszustandes der Hubbühne 7 mit der Palette 5 zurückzuführenden Ausschläge wieder beruhigt. Infolgedessen gibt der ermittelte Messwert die Belastungsverhältnisse des Hubantriebes 8 exakt wieder. Der Messzeitpunkt wird in Figur 5 durch einen Punkt 23 der Linie 21 des Motorstroms markiert.

Bei dem Grenzwert, mit welchem der Messwert des Motorstroms verglichen wird, handelt es sich um einen Wert, der auf den Nennstrom der Hubmotoren 9 bezogen ist. Im dargestellten Beispiel beläuft sich der Motorstrom zum Zeitpunkt der Messung auf rund 60% des Motor-Nennstroms. Dieser Wert liegt unterhalb des vorgegebenen Grenzwertes (hier: 75% des Motor-Nennstroms) und lässt daher den Rückschluss zu, dass der Hubantrieb 8 durch die zu fördernde Last nicht überlastet wird und die Palette 5 folglich durch eine vertikale Förderbewegung der Hubbühne 7 abgefördert werden kann. Zu diesem Zweck wird die mit der Palette 5 beladene Hubbühne 7 zunächst aus der aufgrund der Lasterfassungbewegung angehobenen Position in diejenige Hublage zurückbewegt, die sie bei Übernahme der Palette 5 eingenommen hatte. Ausgehend von dieser Anfangsposition wird dann die vertikale Förderbewegung ausgeführt.

Mit dem Bezugszeichen "25" ist in Figur 5 eine Stromgrenze der Hubmotoren 9 versehen. Diese Stromgrenze liegt hier bei 200% des Motor-Nennstroms. Sie dient zum Schutz der mechanischen Komponenten der Förderanlage unabhängig von dynamischen Belastungen. Wird die Stromgrenze 25 während des Betriebs der Hubmotoren 9 erreicht, so werden diese unmittelbar stillgesetzt. Insofern stellt die Stromgrenze 25 eine zusätzlich zu der vorstehend beschriebenen Lastbegrenzung vorgesehene Sicherheitsvorkehrung dar. Der Grenzwert für die Lastbegrenzung liegt deutlich unter der Stromgrenze 25.

## Patentansprüche

1. Verfahren zum Auslagern von Lagergut (5) aus einem Lagerplatz (4) eines Lagers (1), wobei das Lagergut (5) mit einer horizontalen Übernahmebewegung von dem Lagerplatz (4) auf ein Lastfördermittel (7) übernommen wird, um anschließend gemeinsam mit dem Lastfördermittel (7) mittels eines Hubantriebes (8) des Lastfördermittels (7) mit einer vertikalen Förderbewegung abgefördert zu werden,
**dadurch gekennzeichnet,**
• **dass** das Lagergut (5) nach der Übernahme durch das Lastfördermittel (7) gemeinsam mit dem Lastfördermittel (7) mittels eines Lasterfassungsantriebes mit einer vertikalen Lasterfassungsbewegung bewegt wird,
• **dass** die aufgrund der vertikalen Lasterfassungsbewegung auftretende Belastung des Lasterfassungsantriebes erfasst und mit einer Belastungsgrenze verglichen wird und
• **dass** die Förderbewegung von Lagergut (5) und Lastfördermittel (7) nur dann ausgeführt wird, wenn die aufgrund der vertikalen Lasterfassungsbewegung aufgetretene Belastung des Lasterfassungsantriebes die Belastungsgrenze nicht überschreitet.

2. Verfahren nach Anspruch 1, **dadurch gekennzeichnet, dass** die Lasterfassungsbewegung mittels des als Lasterfassungsantrieb vorgesehenen Hubantriebes (8) des Lastfördermittels (7) ausgeführt wird.

3. Verfahren nach Anspruch 1 oder 2, **dadurch gekennzeichnet, dass** der Lasterfassungsantrieb, gegebenenfalls der Hubantrieb (8) des Lastfördermittels (7), einen Antriebsmotor (9) aufweist und dass die aufgrund der Lasterfassungsbewegung auftretende Belastung des Lasterfassungsantriebes, gegebenenfalls des Hubantriebes (8) des Lastfördermittels (7), über die Kraft des Antriebsmotors (9) aufgrund der Lasterfassungsbewegung erfasst wird.

4. Verfahren nach einem der Ansprüche 1 bis 3, **dadurch gekennzeichnet, dass** der Lasterfassungsantrieb, gegebenenfalls der Hubantrieb (8) des Lastfördermittels (7), als Antriebsmotor (9) einen elektrischen Antriebsmotor mit einem Frequenzumrichter aufweist und dass die Kraft des elektrischen Antriebsmotors (9) über dessen Stromaufnahme an dem Frequenzumrichter erfasst wird.

5. Verfahren nach einem der Ansprüche 1 bis 4, **dadurch gekennzeichnet, dass** die Lasterfassungsbewegung ausgeführt wird, nachdem das Lagergut (5) von dem Lastfördermittel (7) vollständig übernommen worden ist.

6. Verfahren nach einem der Ansprüche 1 bis 5, **dadurch gekennzeichnet, dass** die Belastung des Lasterfassungsantriebes, gegebenenfalls des Hubantriebes (8) des Lastfördermittels (7), zu einem Zeitpunkt erfasst wird, welcher dem Beginn der Lasterfassungsbewegung zeitlich nachfolgt.

7. Verfahren nach einem der Ansprüche 1 bis 6, **dadurch gekennzeichnet, dass** der Lasterfassungsantrieb, gegebenenfalls der Hubantrieb (8) des Lastfördermittels (7), eine Antriebskette (12) aufweist, die zur Ausführung der Lasterfassungsbewegung mittels eines Antriebsmotors (9) über ein Antriebszahnrad angetrieben wird und dass die Lasterfassungsbewegung mit einem Betrag ausgeführt wird, der kleiner ist als die Teilung des Antriebszahnrades der Antriebskette (12).

8. Anordnung zum Auslagern von Lagergut (5) aus einem Lagerplatz (4) eines Lagers (1),
• mit einem Lastfördermittel (7), das einen Hubantrieb (8) mit einer Hubantriebssteuerung (20) aufweist,
• mit einer Transfervorrichtung (24) für Lagergut (5),
• mit einem Lasterfassungsantrieb und einer mit dem Lasterfassungsantrieb in Verbindung stehenden Erfassungseinheit (18) sowie
• mit einer Auswerteeinheit (19), die einerseits mit der Erfassungseinheit (18) und andererseits mit der Hubantriebssteuerung (20) in Verbindung steht,
wobei die Transfervorrichtung (24) das Lagergut mit einer horizontalen Übernahmebewegung von dem Lagerplatz (4) auf das Lastfördermittel (7) übernimmt und wobei der Hubantrieb (8) des Lastfördermittels (7) das von dem Lastfördermittel (7) übernommene Lagergut (5) gemeinsam mit dem Lastfördermittel (7) mit einer vertikalen Förderbewegung abfördert,
**dadurch gekennzeichnet,**
• **dass** der Lasterfassungsantrieb das von dem Lastfördermittel (7) übernommene Lagergut (5) gemeinsam mit dem Lastfördermittel (7) mit einer vertikalen Lasterfassungsbewegung bewegt,
• **dass** die Erfassungseinheit (18) die aufgrund der vertikalen Lasterfassungsbewegung auftretende Belastung des Lasterfassungsantriebes erfasst,
• **dass** die Auswerteeinheit (19) diese Belastung mit einer Belastungsgrenze vergleicht und
• **dass** die Hubantriebssteuerung (20) den Hubantrieb (8) des Lastfördermittels (7) nur dann im Sinne der Ausführung einer Förderbewegung steuert, wenn die aufgrund der vertikalen Lasterfassungsbewegung aufgetretene Belastung des Lasterfassungsantriebes die Belastungsgrenze nicht überschreitet.

9. Anordnung nach Anspruch 8, **dadurch gekennzeichnet dass** als Lasterfassungsantrieb der Hubantrieb (8) des Lastfördermittels (7) vorgesehen ist.

## Claims

1. A method for retrieving stock (5) from a storage location (4) of a storage facility (1), wherein the stock (5) is transferred with a horizontal transfer movement from the storage location (4) onto a load conveyer (7), in order subsequently to be discharged, together with the load conveyor (7), with a vertical conveying movement by means of a lifting drive (8) of the load conveyor (7),
**characterised in that**
• after being taken up by the load conveyor (7) the stock (5) is moved jointly with the load conveyor (7) with a vertical load-sensing movement by means of a load-sensing drive,
• the load on the load-sensing drive occurring as a result of the vertical load-sensing movement is detected and compared with a maximum load, and
• the conveying movement of the stock (5) and the load conveyor (7) is only carried out when the load on the load-sensing drive occurring as a result of the vertical load-sensing movement does not exceed the maximum load.

2. A method according to claim 2, **characterised in that** the load-sensing movement is carried out by means of the lifting drive (8) of the load conveyor (7), said lifting drive being provided as the load-sensing drive.

3. A method according to claim 1 or 2, **characterised in that** the load-sensing drive, optionally the lifting drive (8) of the load conveyor (7), comprises a drive motor (9), and **in that** the load on the load-sensing drive, optionally the lifting drive (8) of the load conveyor (7), resulting from the load-sensing movement is detected by way of the power of the drive motor (9) due to the load-sensing movement.

4. A method according to any one of claims 1 to 3, **characterised in that** the load-sensing drive, optionally the lifting drive (8) of the load conveyor (7), comprises as drive motor (9) an electric drive motor with a frequency converter, and **in that** the power of the electric drive motor (9) is detected by way of the current consumption thereof at the frequency converter.

5. A method according to any one of claims 1 to 4, **characterised in that** the load-sensing movement is carried out after the stock (5) has been completely taken up by the load conveyor (7).

6. A method according to any one of claims 1 to 5, **characterised in that** the load on the load-sensing drive, optionally the lifting drive (8) of the load conveyor (7), is detected at a time which follows the commencement of the load-sensing movement.

7. A method according to any one of claims 1 to 6, **characterised in that** the load-sensing drive, optionally the lifting drive (8) of the load conveyor (7), comprises a drive chain (12) that is driven by means of a drive motor (9) via a drive gear to perform the load-sensing movement, and **in that** the magnitude of the load-sensing movement is smaller than the tooth pitch of the drive gear of the drive chain (12).

8. An arrangement for retrieving stock (5) from a storage location (4) of a storage facility (1), having
• a load conveyor (7), which comprises a lifting drive (8) with a lifting drive control system (20),
• a transfer device (24) for stock (5),
• a load-sensing drive and a sensing unit (18) connected to the load-sensing drive, and also
• an evaluating unit (19), which is connected both to the sensing unit (18) and to the lifting drive control system (20),
wherein the transfer device (24) transfers the stock with a horizontal transfer movement from the storage location (4) onto the load conveyor (7) and wherein the lifting drive (8) of the load conveyor (7) discharges the stock (5) taken up by the load conveyor (7), together with the load conveyor (7), with a vertical conveying movement,
**characterised in that**
• the load-sensing drive moves the stock (5) taken up by the load conveyor (7) jointly with the load conveyor (7) with a vertical load-sensing movement,
• the sensing unit (18) senses the load on the load-sensing drive occurring as a result of the vertical load-sensing movement,
• the evaluation unit (10) compares said load with a maximum load, and
• the lifting drive control system (20) controls the lifting drive (8) of the load conveyor (7) to perform a conveying movement only when the load on the load-sensing drive occurring as a result of the vertical load-sensing movement does not exceed the maximum load.

9. An arrangement according to claim 8, **characterised in that** the lifting drive (8) of the load conveyor (7) is provided as the load-sensing drive.

## Revendications

1. Procédé pour retirer des articles stockés (5) d'un emplacement de stockage (4) d'un entrepôt (1), sachant que l'article stocké (5) est transférée par un mouvement de transfert horizontal de l'emplacement de stockage (4) sur un moyen de transport de charges (7), pour être ensuite évacuée conjointement avec le moyen de transport de charges (7) par un mouvement de transport vertical au moyen d'un entraînement de levage (8) du moyen de transport de charges (7),
**caractérisé**
- **en ce que** l'article stocké (5) est, à la suite de sa prise en charge par le moyen de transport de charges (7), déplacée conjointement avec le moyen de transport de charges (7) par un mouvement vertical de détection de charge au moyen d'un entraînement de détection de charge,
- **en ce que** la sollicitation de l'entraînement de détection de charge survenant du fait du mouvement vertical de détection de charge est détectée et comparée à une limite de sollicitation,
- et **en ce que** le mouvement de transport de l'article stocké (5) et du moyen de transport de charges (7) n'est exécuté que si la sollicitation de l'entraînement de détection de charge survenue du fait du mouvement vertical de détection de charge ne dépasse pas la limite de sollicitation.

2. Procédé selon la revendication 1, **caractérisé en ce que** le mouvement de détection de charge est exécuté au moyen de l'entraînement de levage (8) du moyen de transport de charges (7) prévu comme entraînement de détection de charge.

3. Procédé selon la revendication 1 ou 2, **caractérisé en ce que** l'entraînement de détection de charge - le cas échéant l'entraînement de levage (8) du moyen de transport de charges (7) - présente un moteur d'entraînement (9), et **en ce que** la sollicitation de l'entraînement de détection de charge - le cas échéant de l'entraînement de levage (8) du moyen de transport de charges (7) - survenant du fait du mouvement de détection de charge est détectée au moyen de la force du moteur d'entraînement (9) du fait du mouvement de détection de charge.

4. Procédé selon l'une des revendications 1 à 3, **caractérisé en ce que** l'entraînement de détection de charge - le cas échéant l'entraînement de levage (8) du moyen de transport de charges (7) - présente comme moteur d'entraînement (9) un moteur d'entraînement électrique avec un convertisseur de fréquence, et **en ce que** la force du moteur d'entraînement électrique (9) est détectée au moyen de son courant absorbé au niveau du convertisseur de fréquence.

5. Procédé selon l'une des revendications 1 à 4, **caractérisé en ce que** le mouvement de détection de charge est exécuté une fois que l'article stocké (5) a été entièrement prise en charge par le moyen de transport de charges (7).

6. Procédé selon l'une des revendications 1 à 5, **caractérisé en ce que** la sollicitation de l'entraînement de détection de charge - le cas échéant de l'entraînement de levage (8) du moyen de transport de charges (7) - est détectée à un instant qui est consécutif dans le temps au début du mouvement de détection de charge.

7. Procédé selon l'une des revendications 1 à 6, **caractérisé en ce que** l'entraînement de détection de charge - le cas échéant de l'entraînement de levage (8) du moyen de transport de charges (7) - présente une chaîne d'entraînement (12) qui, pour exécuter le mouvement de détection de charge, est entraînée au moyen d'un moteur d'entraînement (9) par l'intermédiaire d'une roue dentée d'entraînement, et **en ce que** le mouvement de détection de charge est réalisé avec une ampleur qui est inférieure au pas de la roue dentée d'entraînement de la chaîne d'entraînement (12).

8. Dispositif pour retirer des articles stockés (5) d'un emplacement de stockage (4) d'un entrepôt (1),
- avec un moyen de transport de charges (7) qui présente un entraînement de levage (8) doté d'une commande d'entraînement de levage (20),
- avec un dispositif de transfert (24) pour l'article stocké (5),
- avec un entraînement de détection de charge et avec une unité de détection (18) reliée à l'entraînement de détection de charge,
- et avec une unité d'interprétation (19) qui est reliée d'une part à l'unité de
détection (18) et d'autre part à la commande d'entraînement de levage (20), sachant que le dispositif de transfert (24) transfère l'article stocké par un mouvement de transfert horizontal de l'emplacement de stockage (4) sur le moyen de transport de charges (7), et sachant que l'entraînement de levage (8) du moyen de transport de charges (7) évacue conjointement avec le moyen de transport de charges (7), par un mouvement de transport vertical, l'article stocké (5) prise en charge par le moyen de transport de charges (7),
**caractérisé**
- **en ce que** l'entraînement de détection de charge déplace conjointement avec le moyen de transport de charges (7), par un mouvement vertical de détection de charge, l'article stocké (5) prise en charge par le moyen de transport de charges (7),
- **en ce que** l'unité de détection (18) détecte la sollicitation de l'entraînement de détection de charge survenant du fait du mouvement vertical de détection de charge,
- **en ce que** l'unité d'interprétation (19) compare cette sollicitation à une limite de sollicitation,
- et **en ce que** la commande d'entraînement de levage (20) ne commande l'entraînement de levage (8) du moyen de transport de charges (7) au sens de l'exécution d'un mouvement de transport que si la sollicitation de l'entraînement de détection de charge survenue du fait du mouvement vertical de détection de charge ne dépasse pas la limite de sollicitation.

9. Dispositif selon la revendication 8, **caractérisé en ce que** l'entraînement de levage (8) du moyen de transport de charges (7) est prévu comme entraînement de détection de charge.
